# EUROPEAN PATENT APPLICATION

(11) **EP 4 542 426 A1**
(43) Date of publication of application: **23.04.2025**
(21) Application number: 24176481.0
(22) Date of filing: 17.05.2024
(51) Int. Cl.: G06F 21/57, H04L 9/40

(54) **SECURITY MEASURE DETERMINATION DEVICE AND SECURITY MEASURE DETERMINATION METHOD**

(30) Priority: 18.10.2023 JP 2023179309
(71) Applicant: Hitachi, Ltd., Tokyo 100-8280 (JP)
(72) Inventor: SAKATA, Kosei, Tokyo, 100-8280 (JP); OGURA, Takashi, Tokyo, 100-8280 (JP); NAGAYAMA, Tsuyoshi, Tokyo, 100-8280 (JP)
(74) Representative: MERH-IP Matias Erny Reichl Hoffmann Patentanwälte PartG mbB

(57) **Abstract**

A security measure determination device holds: rule information indicating a requirement that is required, in a rule concerning security, of a component included in a subject system; constraint condition information indicating a plurality of constraint conditions about specifications of the component; and measure plan information indicating measure plans that satisfy the requirement and constraint conditions required to be satisfied in order to implement the measure plans, associates the requirement indicated by the rule information with the measure plans indicated by the measure plan information as measure plans that satisfy the requirement, selects, based on the constraint conditions that are indicated by the measure plan information of the measure plans associated with the requirement, and the plurality of constraint conditions that are indicated by the constraint condition information, a measure plan from the measure plans associated with the requirement; and displays the selected measure plan.

## Description

### CLAIM OF PRIORITY

The present application claims priority from Japanese patent application JP 2023-179309 filed on October 18, 2023, the content of which is hereby incorporated by reference into this application.

### BACKGROUND OF THE INVENTION

The present invention relates to a security measure determination device and a security measure determination method.

With an increase in number of cyber attacks to critical infrastructures and other operational technology (OT) systems, development of security regulations is being advanced. In Europe, a bill called European Union (EU) Cyber Resilience Act was published in September 2022. The EU Cyber Resilience Act demands security measures be taken for all Internet of Things (IoT) devices, excluding digital products related to medical care, airplanes, national defense, and automobiles, that are distributed in EU countries.

The EU Cyber Resilience Act is being discussed to take effect by the end of 2025 and, because of penal rules against business operators who have violated the EU Cyber Resilience Act, security measures throughout the lifecycle of a product are an urgent matter to tend to for companies that deal with IoT devices.

In Japan as well, in view of risks of cyber attacks targeting infrastructure companies, the Economic Security Promotion Act was enacted in May 2022, and, in order for stable provision of electricity, communications, financial, and other infrastructure services, a system in which an examination by the government of Japan is conducted in advance in such cases as when an infrastructure company introduces a critical facility is scheduled to be instituted in February 2024 for infrastructure companies in Japan.

In light of those moves regarding security regulations inside and outside Japan, an infrastructure company is demanded to deal with rules including security regulations, legal restraints, and the like about its own and/or clients' OT systems and OT products.

The background art in this technical field includes JP 2017-107405 A. In this publication, there is included the following description: "A security measure planning support device includes: an input reception module configured to receive input of information from a user; an output module configured to display a security measure; a threat-measure DB configured to store a threat and a measure in association with each other; a subordinate measure DB configured to store a subordinate relationship of security measures with each other; a measure planning module configured to extract, from the threat-measure DB, a plurality of security measures associated with a threat and extract, from the subordinate measure DB, a subordinate relationship between the plurality of extracted security measures; a substitute measure DB configured to store a substitution relationship of security measures with each other; and a detailed measure examination module configured to combine, based on the substitution relationship and a constraint condition of a component which is input from the input module, some of the plurality of security measures presented by the measure planning module, and output the combination of security measures to the output module." (See Abstract.)

The background art in this technical field also includes WO 2019/138542 A1. In this publication, there is included the following description: "On the basis of design information about a subject, a threat analysis part identifies a threat which may occur with the subject, and identifies as a first countermeasure a countermeasure for preventing the identified threat. On the basis of the design information and specification information indicating a specification relating to security applied to the subject, a specification adoption part identifies as a second countermeasure a countermeasure for meeting the specification indicated by the specification information. A coupling part couples the first countermeasure with the second countermeasure and generates a secure design." (See Abstract.)

To ensure security of a system, rules such as the ones described above are required to be followed and, in addition, a constraint unique to a component included in the system is required to be taken into consideration. Accordingly, implementation of security measures is expected to take time and increase cost.

With the technology as described in JP 2017-107405 A, a constraint condition (such as being narrow in network band or having a small quantity of CPU resources) of a device used in designing security measures for a system is unique, and there is no discussion about security measures that take a plurality of constraint conditions of the device into consideration.

With the technology as described in WO 2019/138542 A1, in designing security measures for a device, no constraint condition of the device is considered, and a measure plan database is used to design security measures. Although the technology as described in WO 2019/138542 A1 may be capable of extracting a security measure that can satisfy a requirement of the standard, there are issues with implementation of security measures for a component that has many constraints.

### SUMMARY OF THE INVENTION

Accordingly, at least one aspect of the present invention presents a security measure that follows rules concerning security and that satisfy constraints related to components included in a subject system.

The present invention adopts the following structures in order to solve the above problem. A security measure determination device comprises: a processor; and a memory; the memory being configured to hold: rule information indicating a requirement that is required, in a rule concerning security, of a component included in a subject system; constraint condition information indicating a plurality of constraint conditions about specifications of the component; and measure plan information indicating measure plans that satisfy the requirement and constraint conditions required to be satisfied in order to implement the measure plans, the processor being configured to: associate the requirement indicated by the rule information with the measure plans indicated by the measure plan information as measure plans that satisfy the requirement; select, based on the constraint conditions that are indicated by the measure plan information of the measure plans associated with the requirement, and the plurality of constraint conditions that are indicated by the constraint condition information, a measure plan from the measure plans associated with the requirement; and generate data for displaying the selected measure plan.

The at least one aspect of the present invention can present a security measure that follows rules concerning security and that satisfy constraints related to components included in a subject system.

Problems, configurations, and effects which are not mentioned above are explained in the following embodiments.

### BRIEF DESCRIPTIONS OF DRAWINGS

Fig 1 is a block diagram for illustrating a hardware configuration example of a security measure determination device according to the first embodiment.
Fig 2 is a block diagram for illustrating a function configuration example of the security measure determination device according to the first embodiment.
Fig 3 is a table for showing a data configuration example of component information according to the first embodiment.
Fig 4 is a table for showing a data configuration example of constraint condition information according to the first embodiment.
Fig 5 is a table for showing a data configuration example of security regulation database according to the first embodiment.
Fig 6 is a flow chart for illustrating an example of processing of designing measure plan database according to the first embodiment.
Fig 7 is a table for showing a data configuration example of the measure plan database according to the first embodiment.
Fig 8 is a flow chart for illustrating an example of processing by an improvement exploration module according to the first embodiment.
Fig 9 is an explanatory diagram for illustrating a configuration example of a screen displayed on a display device according to the first embodiment.
Fig 10 is a block diagram for illustrating a function configuration example of the security measure determination device according to the second embodiment.
Fig 11 is a table for showing a data configuration example of the security regulation database according to the second embodiment.
Fig 12 is a table for showing a data configuration example of the measure plan database according to the second embodiment.
Fig 13 is a flow chart for illustrating an example of processing by a improvement exploration module according to the second embodiment.
Fig 14 is an explanatory diagram for illustrating a configuration example of a screen displayed on the display device according to the second embodiment.

### DETAILED DESCRIPTION OF THE PREFERRED EMBODIMENTS

Embodiments of a method and a device for determining security measures for OT are described below with reference to the drawings. In the embodiments described below, limitations technically preferred in carrying out this disclosure are given, but are not to limit the scope of the disclosure thereto. Throughout the drawings and the embodiments described herein, constituent elements similar to each other are denoted by the same reference symbols, and description thereof is omitted as required.

In the embodiments, a security measure determination device determines and presents a security measure for a control instrument (an OT product) that is a component of a critical infrastructure or another control system (OT system), as well as a basis for selecting the security measure. However, for any system other than OT systems (for example, an information technology (IT) system), the same procedure as a procedure described below is usable to determine and present a security measure and a basis for selecting the security measure.

### [First Embodiment]

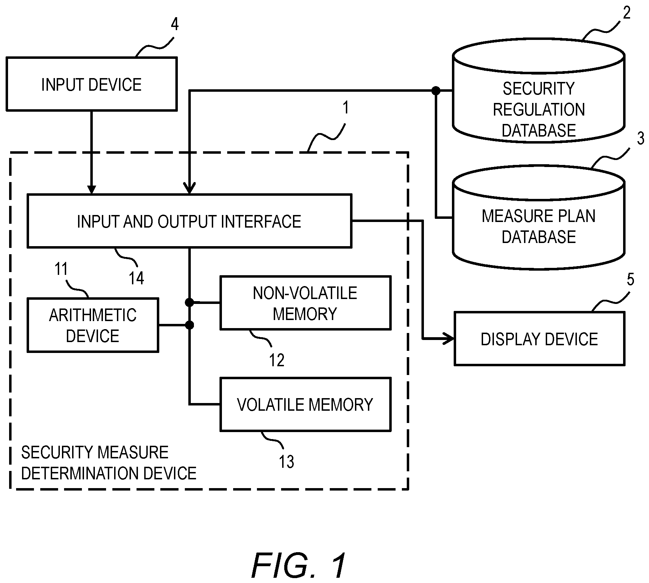

A security measure determination device and a security measure determination method for OT according to a first embodiment of the present invention are described with reference to FIG. 1 to FIG. 9.

FIG. 1 is a block diagram for illustrating a hardware configuration example of a security measure determination device 1 for OT. The security measure determination device 1 determines a security measure for a component (device) included in a control system (OT system) which is an example of a subject system. In particular, the security measure determination device 1 presents a security measure for the component included in the control system to a user along with a basis for selecting the security measure. The result output by the security measure determination device 1 enables the user to take a security measure appropriate for the component included in the control system, based on the basis.

The security measure determination device 1 is configured from a computer including, for example, an arithmetic device 11, a non-volatile memory 12, a volatile memory 13, an input and output interface 14, and other peripheral circuits. Those pieces of hardware cooperate to run software, and thus implement a plurality of functions.

The arithmetic device 11 is an example of a processor, and is configured from, for example, a central processing unit (CPU), a micro processing unit (MPU), and/or a digital signal processor (DSP).

The non-volatile memory 12 includes, for example, a read-only memory (ROM) used as a primary storage device, a flash memory used as an auxiliary storage device, and a hard disk drive or the like. The volatile memory 13 includes, for example, a random access memory (RAM) used as a primary storage device, and the like.

The security measure determination device 1 is a computer system formed on physically one computer or formed on a plurality of computers that are configured logically or physically, and may be operated on separate threads on the same computer, or may operate on a virtual machine built on a plurality of physical computer resources.

As the arithmetic device 11, an application-specific integrated circuit (ASIC), a field-programmable gate array (FPGA), or the like can also be used.

For example, the flash memory, the hard disk drive, and the like that are the non-volatile memory 12 store a program executable by the arithmetic device 11 and data used in execution of the program. In other words, the non-volatile memory 12 is a storage medium (storage device) from which a program that implements the functions of the first embodiment is readable. The ROM and the like that are the non-volatile memory 12 store an invariable program (for example, a Basic Input/Output System (BIOS)) and the like.

The RAM and the like that are the volatile memory 13 are storage media (storage devices) that temporarily store the program executed by the arithmetic device 11 and the data used in execution of the program, as well as a signal input from the input and output interface 14.

The arithmetic device 11 loads the program stored in the non-volatile memory 12 onto the volatile memory 13 to execute calculation. In accordance with the program, the arithmetic device 11 executes predetermined arithmetic processing for data taken in from the input and output interface 14, the non-volatile memory 12, and the volatile memory 13.

The input and output interface 14 is an interface device to which an input device 4 and a display device 5 are coupled, and which receives input from an operator and outputs a result of execution of the program in a format visually recognizable to the operator. A keyboard, a mouse, and the like are examples of the input device 4. For example, a device having a display screen, such as a liquid crystal monitor, a printer, and the like, are examples of the display device 5. The input and output interface 14 may further have a function as a network interface device which controls communication to and from an external device by following a predetermined protocol.

The security measure determination device 1 is coupled, via the input and output interface 14, to a security regulation database 2 and a measure plan database 3. The security regulation database 2 and the measure plan database 3 are each a database in which predetermined data is stored. The data stored in the security regulation database 2 and the data stored in the measure plan database 3 are described later in detail. The security regulation database 2 and the measure plan database 3 may be stored in the non-volatile memory 12 and/or the volatile memory 13.

In the first embodiment, information used by the security measure determination device 1 does not depend on data structure and may be expressed in any data structure. For example, a data structure appropriately selected from a table, a list, a database, and a queue can be used to store the information.

The input and output interface 14 converts a data input signal from the input device 4 and signals input from the security regulation database 2 and the measure plan database 3 into data that can be calculated by the arithmetic device 11. The input and output interface 14 also generates a signal for output which is based on a result of the calculation in the arithmetic device 11, and outputs the generated signal to the display device 5.

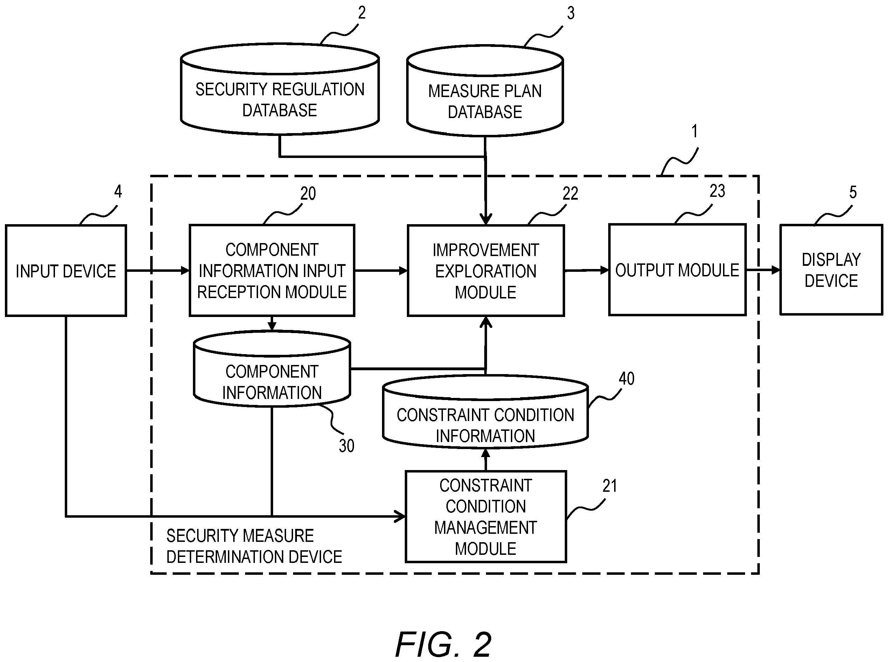

FIG. 2 is a block diagram for illustrating a function configuration example of the security measure determination device 1. The security measure determination device 1 includes, for example, a component information input reception module 20, a constraint condition management module 21, an improvement exploration module 22, and an output module 23, which are each a function.

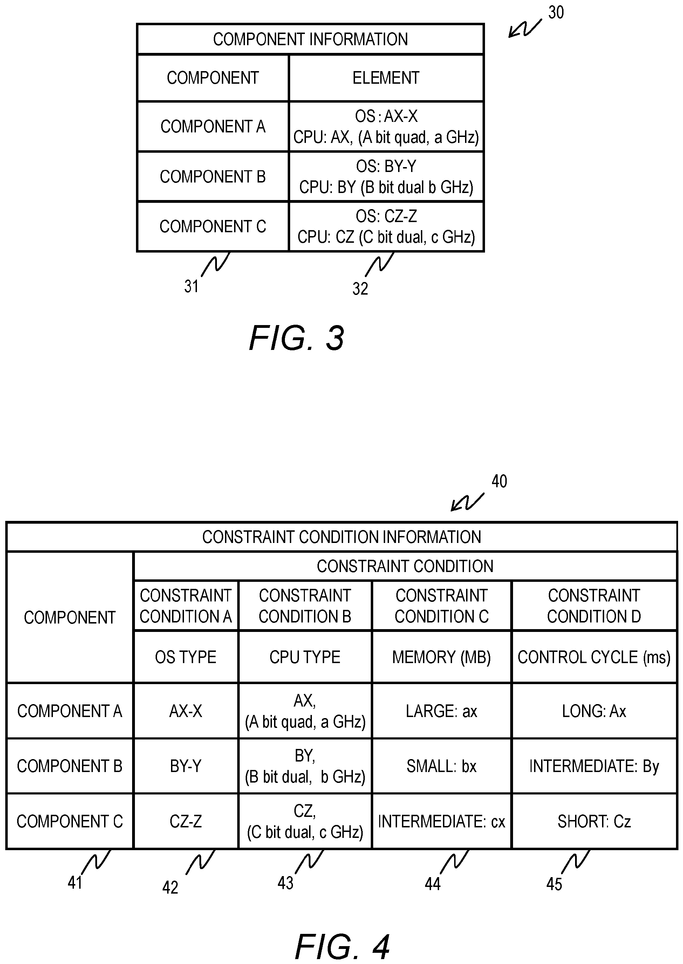

The component information input reception module 20 displays, on the display device 5, a user interface through which a designer is to input component information 30 via the input device 4, and outputs the component information 30 input by the designer to the constraint condition management module 21 and the improvement exploration module 22. The component information 30 is described later with reference to FIG. 3.

The constraint condition management module 21 generates a constraint condition related to a component (for example, a constraint condition about specifications of a component), from the component information 30 and/or input from the designer via the input device 4, stores the constraint condition in constraint condition information 40, and analyzes the generated constraint condition information 40. The constraint condition management module 21 also outputs, to the improvement exploration module 22, a plurality of combinations of constraint conditions that are automatically input or determined by direct input. The constraint condition information 40 is described later with reference to FIG. 4.

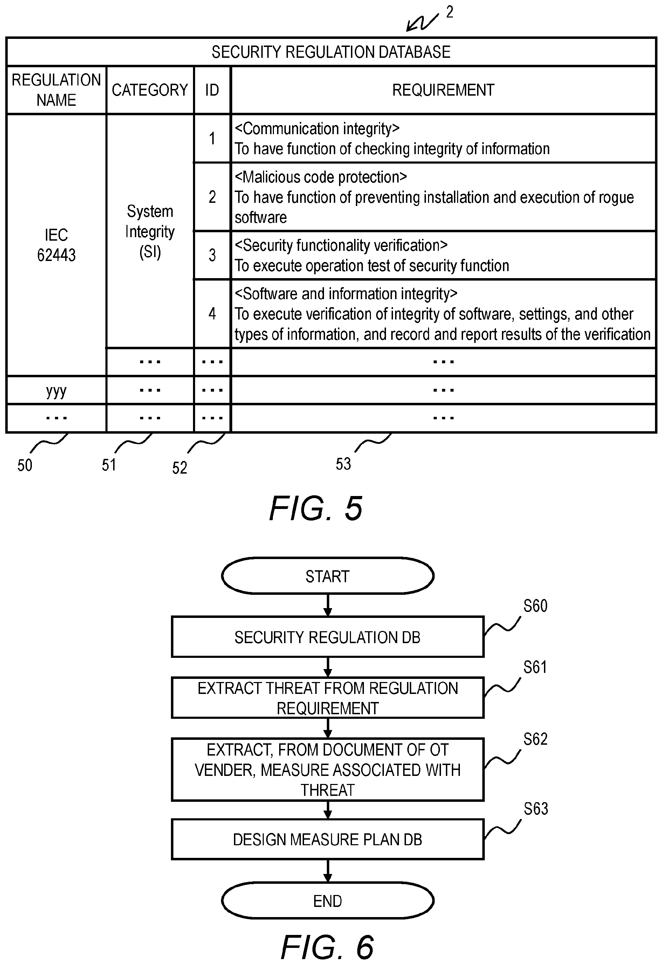

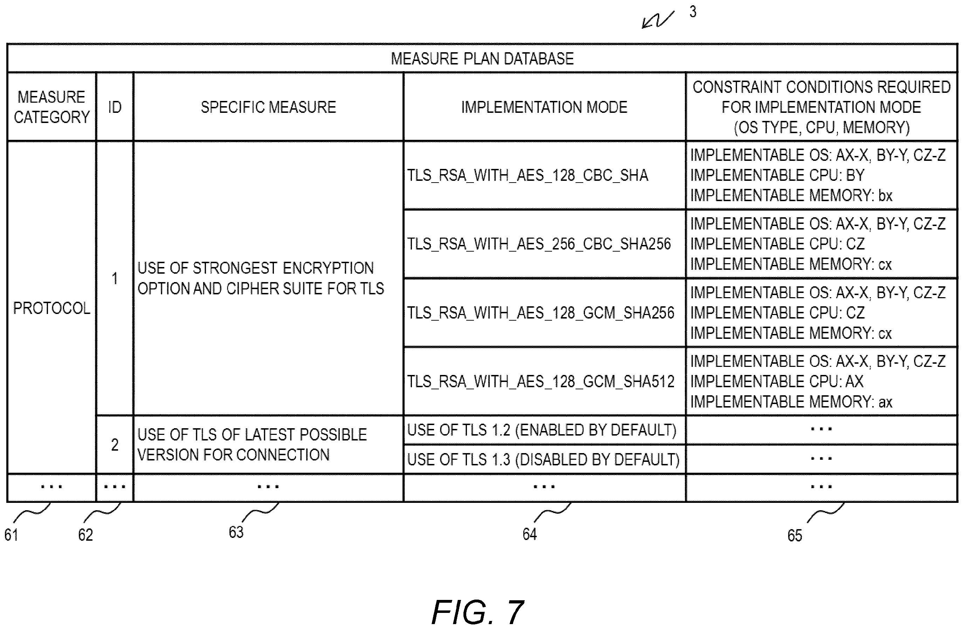

The improvement exploration module 22 receives input of the component information 30, the constraint condition information 40, the security regulation database 2, and the measure plan database 3 to determine a security measure required for a component, along with a basis of the selection. The security regulation database 2 is described later with reference to FIG. 5. The measure plan database 3 is described later with reference to FIG. 6. Details of the processing by the improvement exploration module 22 are described later with reference to FIG. 7.

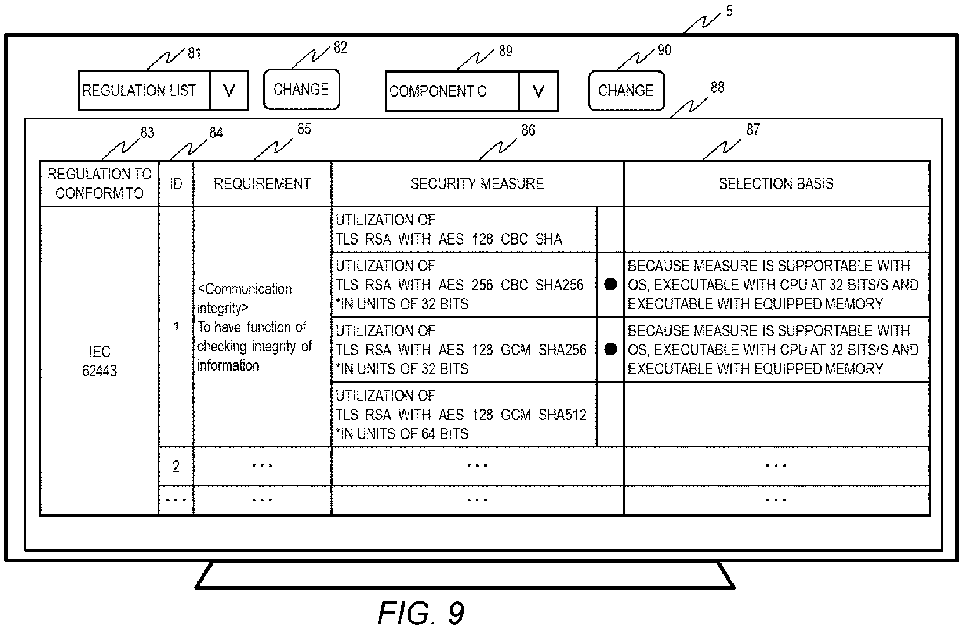

The output module 23 outputs, to the display device 5, the security measure determined by the improvement exploration module 22 and the basis for selecting the measure, along with a regulation to which the security measure conforms, to thereby inform the user of contents thereof. A display screen output by the output module 23 to the display device 5 is described later with reference to FIG. 9.

The arithmetic device 11, for example, functions as the component information input reception module 20 by operating in accordance with a component information input reception program loaded on the volatile memory 13, and functions as the constraint condition management module 21 by operating in accordance with a constraint condition management program loaded on the volatile memory 13. The same relationship between a function module and a program applies to other function modules included in the security measure determination device 1.

FIG. 3 is a table for showing a data configuration example of the component information 30. The component information 30 is stored in, for example, the non-volatile memory 12 and/or the volatile memory 13. The component information 30 includes a component field 31 and an element field 32.

A component indicated in the component field 31 is a control instrument (for example, an OT product) included in a control system (for example, an OT system), and is, for example, a programmable logic controller (PLC) or an IoT gateway (IoTGW).

The element field 32 indicates, for each component, information about elements that form the component (elements included in the component, and specifications, type, performance, and the like of each of the elements). To give a specific example, the element field 32 indicates types of an OS and a chip of a CPU that are installed in the PLC or the IoTGW. Examples of OS types include general-purpose OS and real-time operating system (RTOS). The component information 30 may also include a hardware interface, a product ID, a media access control (MAC) address, and the like.

FIG. 4 is a table for showing a data configuration example of the constraint condition information 40. The constraint condition information 40 is stored in, for example, the non-volatile memory 12 and/or the volatile memory 13. The constraint condition information 40 of a component is determined by automatic extraction from the component information 30, or direct input by the designer. The constraint condition information 40 includes, for example, a component field 41 indicating a component and constraint condition fields 42 to 45 each of which indicates a specific constraint condition.

In the example of FIG. 4, as specific constraint conditions of a component, Constraint Condition A related to the OS (for example, a version and a type of the OS), Constraint Condition B related to the CPU (for example, a type and performance of a chip of the CPU), Constraint Condition C related to a memory (for example, a type and a capacity of the memory), and Constraint Condition D related to a control cycle of the component (an example of an operational status of the system and/or the component) are stored in the constraint condition field 42, the constraint condition field 43, the constraint condition field 44, and the constraint condition field 45, respectively.

For example, to focus on Constraint Condition C in the example of FIG. 4, Component A has the largest memory area and Component B has the smallest memory area. To focus on Constraint Condition D in the example of FIG. 4, Component A has the longest control cycle and Component C has the shortest control cycle. Examples of constraint conditions of a component are not limited to those described above, and may include the number of hardware interfaces, a supported protocol, a manufacturing cost of the component, and the like.

FIG. 5 is a table for showing a data configuration example of the security regulation database 2. The security regulation database 2 includes, for example, a regulation name field 50, a category field 51, an ID field 52, and a requirement field 53.

The regulation name field 50 holds information indicating a name of a security regulation. Security regulations in the first embodiment may include any rules concerning security for OT products (an example of components), such as security-related domestic laws, international laws, domestic rules, international rules, industry rules, company rules, domestic standards, international standards, industry standards, and company standards. In other words, the security regulation database 2 is an example of rule information.

The category field 51 holds information indicating a macroscopic category in the security regulation. The ID field 52 holds an ID for identifying a requirement in the category. The requirement field 53 holds information indicating the requirement in the category.

The EU Cyber Resilience Act, International Electrotechnical Commission (IEC) 62443, and other international standards for control system security are each an example of the security regulations. In IEC 62443-4-2, security requirements for components are classified into seven categories.

A category [System Integrity] shown in the example of FIG. 5 is one of the seven categories, and is a category related to integrity of the system. In [System Integrity], a requirement of [ID: 1] is [Communication Integrity], that is, the component is required to have a function of checking integrity of information.

### [Measure Plan Database Designing Processing]

FIG. 6 is a flow chart for illustrating an example of processing of designing the measure plan database 3. In the processing of FIG. 6, the measure plan database 3 may be generated by the security measure determination device 1 or by an external system.

In Step S60, the security regulation database 2 is generated from information of security regulations input to the input device 4, or from information of security regulations received from an external system.

In Step S61, for each requirement in the security regulation database 2, a threat corresponding to the requirement is extracted by, for example, using a known predetermined threat model for components, or by direct input from the user.

For example, in the security regulation database 2 of FIG. 5, Lucky Thirteen Attack is extracted as a threat corresponding to the requirement [Communication Integrity] which has [ID: 1] and which belongs to the category [System Integrity] in the category field 51. Lucky Thirteen Attack is an attack targeting processing that is executed to decrypt an encrypted block of data in block cipher, and aims to extract information about the data or about a key by exploiting vulnerabilities of block cipher.

In Step S62, a security document possessed by an OT vender (control instrument vender) is acquired, and a measure against the threat is extracted from the security document. In the security document, for example, the threat and the measure are written in association with each other in advance. The measure written in the security document includes, for example, a specific measure against the threat, a measure category of the specific measure, an implementation mode for carrying out the specific measure, and a constraint condition required to be satisfied by the implementation mode. In Step S63, every measure extracted in Step S62 is gathered to design the measure plan database 3.

The security regulation database 2 may further store, for each requirement, information indicating the threat extracted in Step S61, in association with the requirement. The measure plan database 3 may further store, for each specific measure, information indicating a threat that corresponds to the measure extracted in Step S62, in association with the specific measure.

FIG. 7 is a table for showing a data configuration example of the measure plan database 3. The measure plan database 3 includes, for example, a measure category field 61, an ID field 62, a specific measure field 63, an implementation mode field 64, and a constraint condition field 65.

The measure category field 61 holds information indicating a category to which a specific measure for improving security belongs. The ID field 62 holds an ID for identifying the specific measure. The specific measure field 63 holds information indicating the specific measure. The implementation mode field 64 holds information indicating an implementation mode for implementing the specific measure.

The constraint condition field 65 holds information indicating a constraint condition required for the implementation mode (a constraint condition required of the component to satisfy in order to implement the specific measure). In FIG. 7, no constraint condition about the control cycle is written among constraint conditions corresponding to a specific measure that belongs to [Measure Category: Protocol] and that has [ID: 1]. When no constraint condition about the control cycle is written for an implementation mode as in this case, it means that the implementation mode can be implemented in any control cycle.

In the example of FIG. 7, protocol is defined in the measure category field 61 for security measures of components. One of security measures for data communication held by a component is encryption of communication data. An example of encryption of communication data is a method using a Transport Layer Security (TLS) protocol. "Use of a cipher suite" defined in the specific measure field 63 in the example of FIG. 7 is a protocol for encrypted communication of TLS, and indicates that a plurality of encryption algorithms are to be used in combination.

In the implementation mode field 64 in the example of FIG. 7, a plurality of types of cipher suites are defined for the specific measure having [ID: 1]. In general, a cipher suite is expressed as TLS_ [authentication (Au)] _WITH_ [symmetric-key cryptography (Enc)] _ [hash (Hash/Mac)]. For example, TLS_RSA_WITH_AES_128_CBC_SHA in the implementation mode field 64 of FIG. 7 is an expression example of a case in which authentication (digital signature) is RSA encryption, symmetric-key cryptography is a CBC mode of AES-128, and a hash value is SHA1. As shown in the implementation mode field 64 of FIG. 7, there are a plurality of types of cipher suites for different uses, and which encryption algorithm is used varies depending on the type.

In the example of FIG. 7, the constraint condition field 65 stores constraint conditions related to the OS, the CPU, and the memory. The example of FIG. 7 indicates that TLS_RSA_WITH_AES_128_CBC_SHA of the implementation mode field 64 is implementable when the OS is one of AX-X, BY-Y, or CZ-Z, and the specifications of the CPU and the memory are BY or higher and bx or higher, respectively.

### [Internal Processing of Improvement Exploration Module 22]

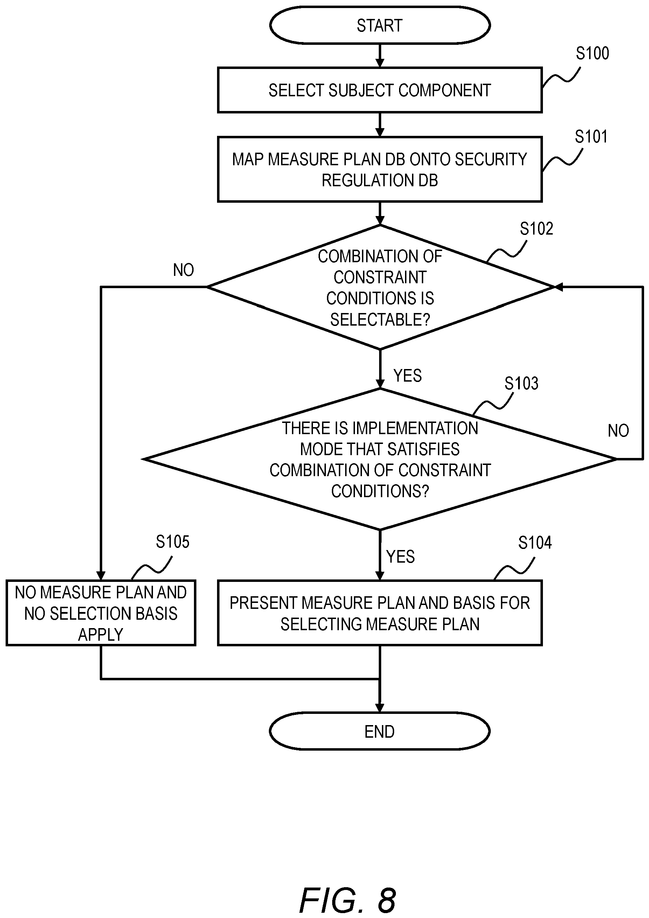

FIG. 8 is a flow chart for illustrating an example of processing by the improvement exploration module 22. The improvement exploration module 22 presents a measure plan and a basis for selecting the measure plan, based on the component information 30, the constraint condition information 40 of the component, the security regulation database 2, and the measure plan database 3. The processing by the improvement exploration module 22 is described below.

In Step S100, the improvement exploration module 22 selects, in accordance with, for example, input from the user via the input device 4, from the component information 30, a component for which a security measure is to be considered. It is assumed in the following description that Component C has been selected in Step S100 as a subject component. In the constraint condition information 40 of FIG. 4, constraint conditions of Component C are Constraint Condition A: OS = CZ-Z, Constraint Condition B: CPU = CZ (C = 32 bits, "c" = 1.0 gigahertz), Constraint Condition C: cx = 512 megabytes, and Constraint Condition D: Cz = 40 milliseconds.

In Step S101, the improvement exploration module 22 maps (specific measures of) the measure plan database 3 onto (requirements of) the security regulation database 2. For example, when a security regulation "IEC 62443" is selected in the security regulation database 2, the requirement [Communication Integrity] having [ID: 1] and belonging to [System Integrity] in the category field 51 is associated with the specific measure [Use of the Strongest Encryption Option and Cipher Suite for TLS] having [ID: 1] and belonging to [Protocol] of the measure plan database 3.

The mapping in Step S101 is determined based on, for example, the threat extracted for each requirement of the security regulation database 2 in Step S61 and a threat that corresponds to the measure extracted in Step S62. It is assumed that, in Step S61, Lucky Thirteen Attack has been extracted as a threat to the requirement [Communication Integrity] having [ID: 1] and belonging to [System Integrity] in the category field 51. It is also assumed that, in Step S62, a measure (specific measure) against the extracted threat has been extracted from the security document, and that the extracted measure is [Use of the Strongest Encryption Option and Cipher Suite for TLS] having [ID: 1] and belonging to [Protocol] of the measure plan database 3. The association described above is thus executed in the mapping.

In this manner, by mapping (specific measures of) the measure plan database 3 onto (requirements of) the security regulation database 2 in Step S101, the improvement exploration module 22 can derive a versatile security measure for a requirement of a regulation.

In Step S102, the improvement exploration module 22 determines whether a combination of constraint conditions (a combination of constraint conditions includes one constraint condition or a plurality of constraint conditions) indicated by the constraint condition information 40 of Component C is selectable. To give a specific example, the improvement exploration module 22 acquires a combination of constraint conditions of Component C that is indicated by the constraint condition information 40, in accordance with input to the input device 4.

For example, whether any combination of some of constraint conditions included in the acquired combination is satisfied by an implementation mode is determined in Step S103, and, when an answer is not negative, the improvement exploration module 22 determines that the acquired combination is selectable. When it is determined in Step S103 that no implementation mode satisfies at least one of the combinations of some of the included constraint conditions, the improvement exploration module 22 determines that the acquired combination is not selectable.

To give a specific example, when a combination of Constraint Condition A, Constraint Condition B, and Constraint Condition C (Constraint Condition A ∧ Constraint Condition B ∧ Constraint Condition C) is selected in Step S102, and none of combinations "Constraint Condition A ∧ Constraint Condition B," "Constraint Condition A ∧ Constraint Condition C," "Constraint Condition B ∧ Constraint Condition C," Constraint Condition A, Constraint Condition B, and Constraint Condition C is a subject of the determination in Step S103, or it is determined in Step S103 that there is an implementation mode that satisfies the combination, "Constraint Condition A ∧ Constraint Condition B ∧ Constraint Condition C" is a selectable combination. When it is determined for at least one of those combinations that no implementation mode satisfies the one of those combinations, "Constraint Condition A ∧ Constraint Condition B ∧ Constraint Condition C" is an unselectable combination.

In Step S103, the improvement exploration module 22 determines whether any of implementation modes included in the specific measure associated in the mapping of Step S101 satisfies the combination of constraint conditions selected in Step S102. Although constraint conditions indicated by the constraint condition information 40 can be combined in a plurality of ways, an example in which a combination of Constraint Condition A (the type of the OS), Constraint Condition B (the type of the CPU), and Constraint Condition C (memory) is selected in Step S102 is described below.

First, the improvement exploration module 22 lists cipher suites executable with the OS (CZ-Z) of Component C that is indicated by the constraint condition information 40 with respect to Constraint Condition A: OS = CZ-Z. Specifically, from a result of the mapping of Step S101, implementation modes of the security measure that is associated with the requirement [Communication Integrity] having [ID: 1] and belonging to [System Integrity] have four cipher suites: TLS_RSA_WITH_AES_128_CBC_SHA, TLS_RSA_WITH_AES_256_CBC_SHA256, TLS_RSA_WITH_AES_128_GCM_SHA256, and TLS_RSA_WITH_AES_128_GCM_SHA512, and the improvement exploration module 22 determines, from the constraint condition field 56 of the measure plan database 3, that every one of the implementation modes is theoretically executable with the OS (CZ-Z) of Component C.

Further, when the improvement exploration module 22 adds, in addition to Constraint Condition A (the type of the OS), Constraint Condition B (the type of the CPU), that is, in a case of "Constraint Condition A (OS = CZ-Z) ∧ Constraint Condition B (CPU = CZ (C = 32 bits, "c" = 1.0 gigahertz))," selectable cipher suites are narrowed down from the above-mentioned four candidates to two. This is because CPU performance of Component C selected in Step S100 is specified to be 32 bits by Constraint Condition B, and the candidates are accordingly narrowed down to cipher suites executable at 32 bits/s, which are TLS_RSA WITH AES 256_CBC SHA256 and TLS_RSA_WITH_AES_128_GCM_SHA256.

Further, when the improvement exploration module 22 adds Constraint Condition C (the memory), that is, in a case of "Constraint Condition A (OS = CZ-Z) ∧ Constraint Condition B (CPU = CZ (C = 32 bits, "c" = 1.0 gigahertz)) ∧ Constraint Condition C (cx = 512)," the two cipher suites remaining after the narrowing down are executable with Constraint Condition C satisfied, irrespective of whether a key length of the Advanced Encryption Standard (AES) is 128 bits or 256 bits. Both of the cipher suites are accordingly extracted as candidate implementation modes.

Thus, there is a combination (TLS_RSA_WITH_AES_256_CBC_SHA256 and TLS_RSA_WITH_AES_128_GCM_SHA256) that satisfies the combination of constraint conditions (Constraint Condition A ∧ Constraint Condition B ∧ Constraint Condition C) in Step S102, and the output module 23 accordingly presents, in Step S104, on the display device 5, implementation modes (utilization of TLS_RSA_WITH_AES_256_CBC_SHA256 and TLS_RSA_WITH_AES_128_GCM_SHA256) of the security measure plan, and a basis for selecting the security measure plan (because Constraint Condition A ∧ Constraint Condition B ∧ Constraint Condition C are satisfied). The processing is then ended.

When there is no combination of constraint conditions in Step S102, that is, when no combination of constraint conditions is selectable in Step S102, the output module 23 displays, in Step S105, on the display device 5 to inform of the fact that no security measure plan and no selection basis apply.

In the example described above, the improvement exploration module 22 selects, in Step S102, a combination of constraint conditions in accordance with input to the input device 4. However, the improvement exploration module 22 may be designed so that, for example, a combination including all constraint conditions indicated by the constraint condition information 40 of a component selected in Step S100 is automatically selected. In this case, the process proceeds to Step S104 when the improvement exploration module 22 determines that there is an implementation mode that satisfies the combination, and proceeds to Step S105 when the improvement exploration module 22 determines that there is no implementation mode that satisfies the combination.

The improvement exploration module 22 may also be designed so as to, for example, execute the processing step of Step S103 for every combination of constraint conditions. In this case, when determining for one combination out of all combinations of constraint conditions that there is an implementation mode that satisfies the one combination, the improvement exploration module 22 executes the processing step of Step S104 for the one combination, and executes Step S104 for every such combination. When the improvement exploration module 22 determines that every combination of constraint conditions has no implementation mode that satisfies the combination, the process proceeds to Step S105.

FIG. 9 is an explanatory diagram for illustrating a configuration example of a screen displayed on the display device 5 in Step S104. The output module 23 outputs, to the display device 5, a security measure and a basis for selecting the security measure that are provided by the improvement exploration module 22, along with a regulation to which the security measure conforms, to inform the user of contents thereof. The method of informing the user is not limited thereto, and a generative AI may be utilized to inform the user of a security measure and a basis for selecting the security measure that are provided by the improvement exploration module 22.

The display screen of the display device 5 includes, for example, a regulation selection field 81, a regulation changing button 82, an OT product-geared security measure display area 88, a component selection field 89, and a component changing button 90.

The regulation selection field 81 is a field for selecting a regulation to be observed by a component, and the EU Cyber Resilience Act and IEC 62443, for example, meet a description of such regulations. In a case in which the regulation changing button 82 is selected with a regulation selected in the regulation selection field 81, what is displayed in the OT product-geared security measure display area 88 changes to display about the regulation.

The OT product-geared security measure display area 88 includes, for example, a regulation field 83, an ID field 84, a requirement field 85, a security measure field 86, and a selection basis field 87. The regulation field 83 indicates a name of a regulation to be observed. The ID field 84 holds an ID for identifying a requirement (a specific measure mapped in Step S101) of the regulation. The requirement field 85 holds information indicating the requirement of the regulation.

The security measure field 86 indicates a security measure (implementation modes included in the specific measure mapped in Step S101) for the requirement. The security measure field 86 is designed to display at least one or more security measures for the requirement of the regulation and, when there are a plurality of security measures that apply, displays a result of selecting implementable measures out of the plurality of security measures.

In the example of FIG. 9, an implementation mode determined in Step S103 as an implementation mode that satisfies constraint conditions is marked by a black circle attached to a security measure name indicated in the security measure field 86. An implementation mode determined in Step S103 as an implementation mode that fails to satisfy constraint conditions may also be displayed in the security measure field 86 in addition to an implementation mode determined to satisfy constraint conditions as in the example of FIG. 9, or may be omitted from the security measure field 86. The selection basis field 87 indicates a basis for selectability of the security measure indicated by the security measure field 86. As the basis, the selection basis field 87 displays, for example, information indicating that constraint conditions required of the security measure to satisfy are satisfied.

The security measure determination device 1 according to the first embodiment is capable of identifying measure plans that match a requirement of a security measure, by mapping the measure plan database 3 onto the security regulation database 2. The security measure determination device 1 is also capable of quickly selecting, by identifying a measure plan that satisfies constraint conditions of a component from among the mapped measure plans, a measure plan that is implementable under the constraint conditions from among the measure plans that match the requirement of the security regulation. The security measure determination device 1 can accordingly reduce the user's man-hours for conforming to the security regulation. The security measure determination device 1 is further capable of presenting a basis for selecting the measure plan in relation to the constraint conditions.

In a case of a component specialized for incorporation such as OT products, in particular, constraint conditions about resources of elements included in the component are severe (for example, specifications of each of the elements are low compared to instruments included in an IT system). The security measure determination device 1 according to the first embodiment is capable of narrowing down candidates for a security measure implementable in OT products to a few, by analyzing combinations of constraint conditions unique to OT products, and is further capable of presenting a basis for the selection. The security measure determination device 1 can thus present a highly suitable security measure in security design and security operation of OT products, with a convincing basis.

### [Second Embodiment]

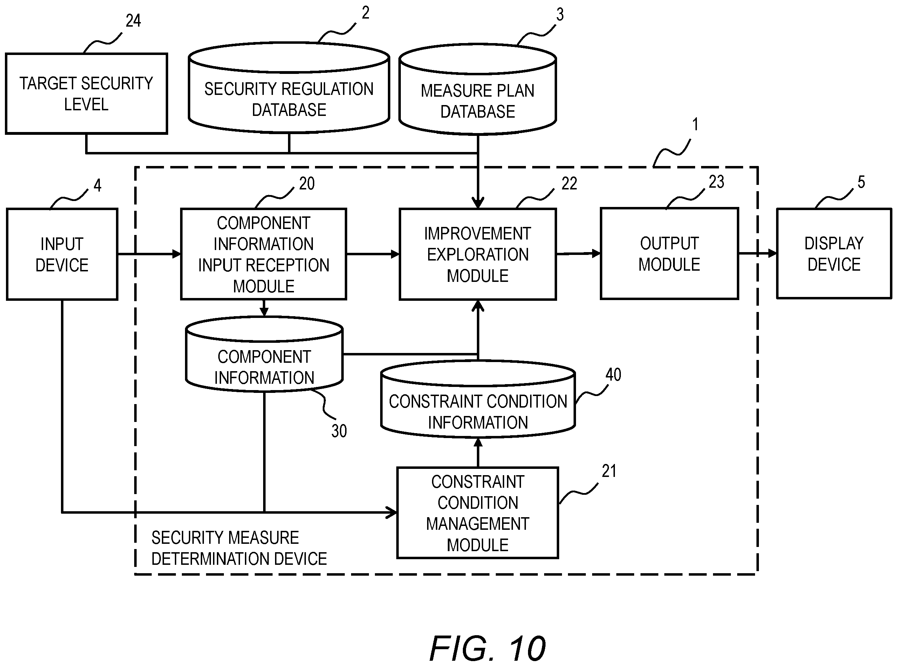

A method and a device for determining security measures for OT according to a second embodiment of the present invention are described below with reference to FIG. 10 to FIG. 14. Constituent elements that are the same as or equivalent to the constituent elements described in the first embodiment are denoted by the same reference symbols, and description given here is mainly about differences from the first embodiment.

FIG. 10 is a block diagram for illustrating a function configuration example of the security measure determination device 1. The security measure determination device 1 according to the second embodiment differs from the security measure determination device 1 according to the first embodiment in that setting of a target security level 24 is additionally received. In the following description, security level may be noted in an abbreviated form as "SL."

The target security level 24 is an example of indices in security design and security implementation of a control system, although different security regulations adopt different styles of notation. Improvement in security performance of systems and components is expected by setting the target security level 24 and implementing a security measure that satisfies the target security level 24.

In general, there are a plurality of levels to security level, and a level application range in the second embodiment is from SL0 to SL4 described in IEC 62443. States indicated by the respective SLs are as follows. SL0: a state in which no security measure is taken, SL1: a state of possessing resistance to unexpected accidents and errors, SL2: a state of possessing resistance to intentional attacks carried out with low resources and knowledge, SL3: a state of possessing resistance to attacks carried out with moderate resources and knowledge (resources and knowledge greater than at SL2), and SL4: a state of possessing resistance to attacks carried out with extended resources (resources greater than at SL3) and motivation.

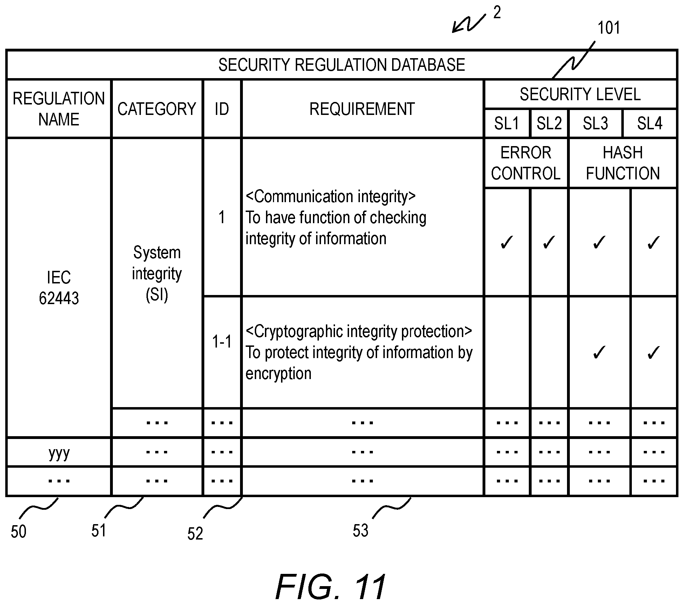

FIG. 11 is a table for showing a data configuration example of the security regulation database 2. The security regulation database 2 in the second embodiment differs from the security regulation database 2 in the first embodiment in that a security level field 101 is further included.

The security regulation database 2 in the second embodiment also differs from the security regulation database 2 in the first embodiment in that requirements indicated in the requirement field 53 and IDs that are indicated in the ID field 52 and that are associated with the requirements are sub-divided by security levels indicated in the security level field 101.

Checkmarks indicating whether an associated requirement is to be satisfied at respective SLs are stored in the security level field 101. In each record of the security regulation database 2, when a checkmark is stored for one SL in the security level field 101, a checkmark is stored for every SL in the record that is higher than the one SL without fail. In other words, a requirement to be satisfied at one SL is to be satisfied at SLs higher than the one SL without fail (a requirement to be satisfied at SL1 is to be satisfied at SL2 and higher security levels as well, a requirement to be satisfied at SL2 is to be satisfied at SL3 and higher security levels as well, and a requirement to be satisfied at SL3 is to be satisfied at SL4 as well).

Most of security regulations have, in addition to requirements required to be satisfied at all security levels, such as the requirement of [ID: 1] in the example of FIG. 11, requirements that vary depending on the user's target security level 24, such as [ID: 1-1].

In the example of FIG. 11, the requirement [Communication Integrity] which has [ID: 1] and which belongs to the category [System Integrity] in the category field 51 is required to be achieved at all security levels, and a requirement [Cryptographic Integrity Protection] which has [ID: 1-1] and which belongs to the category [System Integrity] is a requirement required at SL ≥ 3.

Implementation modes also differ for SL ≤ 2 and for SL ≥ 3. At SL ≤ 2, an attacker is assumed to have no special knowledge of OT systems and OT products, and an implementation mode for implementing a measure against intentional alteration of information or the like is accordingly excluded from candidate implementation modes. At SL ≥ 3, on the other hand, attacks from terrorists having extended knowledge of cyber attacks and from state-sponsored activities are assumed as well, and more secure implementation modes are accordingly required. In this example, utilization of error control (parity check and CRC) is assumed at SL ≤ 2, and utilization of cryptographic technology such as hash function is assumed at SL ≥ 3.

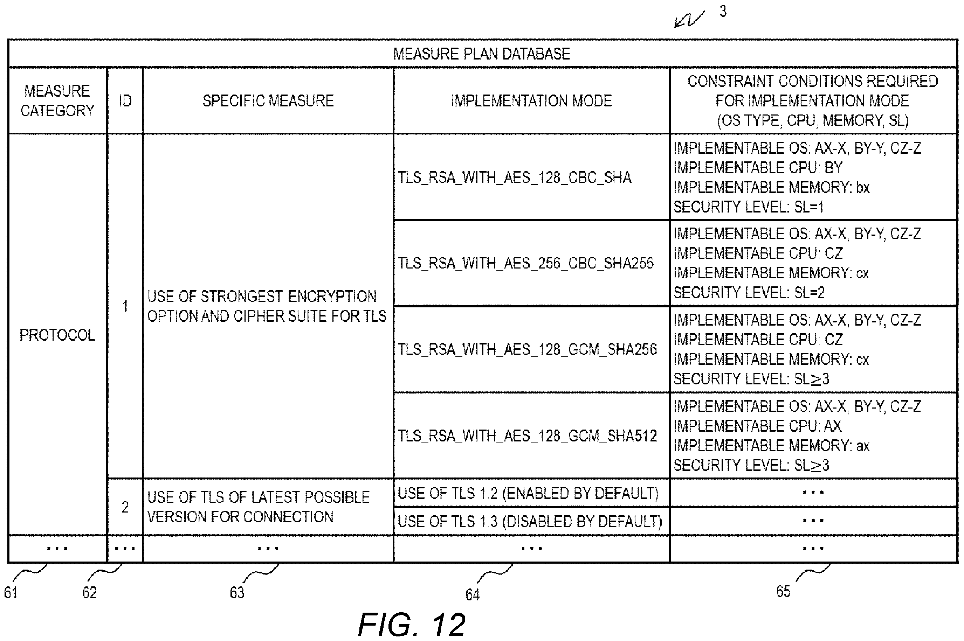

FIG. 12 is a table for showing a data configuration example of the measure plan database 3. In the measure plan database 3 in the second embodiment, a constraint condition related to a security level in implementation is further defined in the constraint condition field 65 as a constraint condition required of an implementation mode to satisfy.

The constraint condition field 65 in the example of FIG. 12 indicates constraint conditions (the OS, the CPU, the memory, and the security level) for implementing an implementation mode in the implementation mode field 64. For example, the constraint condition field 65 indicates that TLS_RSA_WITH_AES_128_CBC_SHA in the implementation mode field 64 is executable when the OS is one of AX-X, BY-Y, or CZ-Z, specifications of the CPU and the memory are BY or higher and bx or higher, respectively, and the security level (SL) satisfies SL = 1.

### [Internal Processing of Improvement Exploration Module 22]

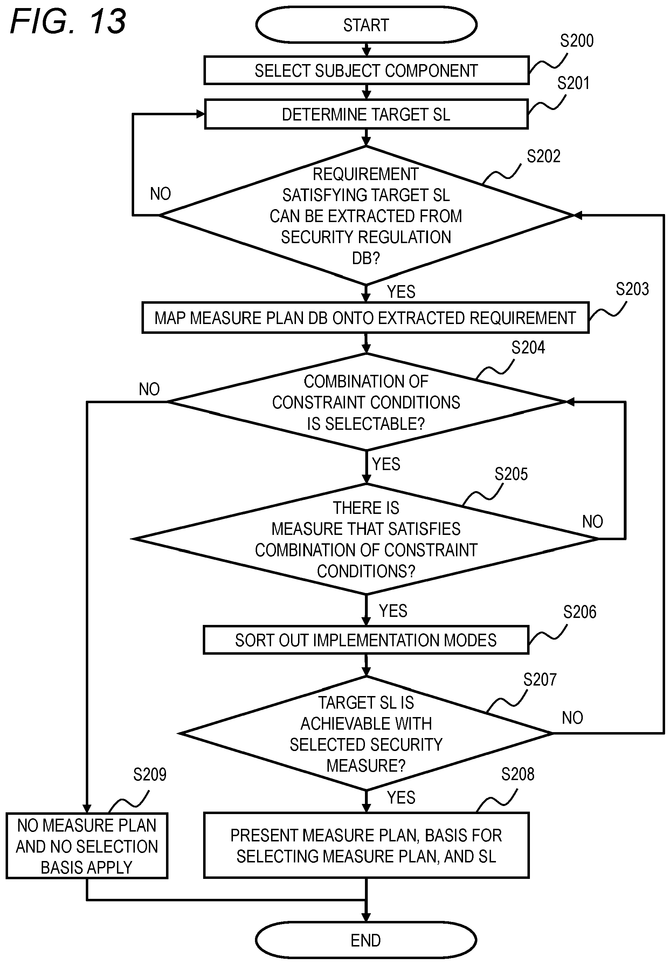

FIG. 13 is a flow chart for illustrating an example of processing by the improvement exploration module 22. The improvement exploration module 22 presents a measure plan and a basis for selecting the measure plan, based on the component information 30, the constraint condition information 40 of a component, the security regulation database 2, the measure plan database 3, and the target security level 24. Processing steps thereof are described below.

In Step S200, the improvement exploration module 22 selects, from the component information 30, a component for which a security measure is to be considered, by the same method that is used in Step S100. It is assumed in the following description that Component C has been selected in Step S200. Details of Constraint Condition A to Constraint Condition D are assumed to be the same as in the first embodiment.

In Step S201, the improvement exploration module 22 determines the target security level 24 in accordance with input from the user to the input device 4. In Step S202, the improvement exploration module 22 determines whether a security requirement that satisfies the target security level 24 determined in Step S201 (a record that satisfies the determined target security level) can be extracted from the security regulation database 2.

For example, when the user's target security level 24 is set as SL = 3, the improvement exploration module 22 extracts, from the security regulation database 2 of FIG. 11, as security requirements, "[System Integrity] [ID: 1] [Communication Integrity]" and "[System Integrity] [ID: 1-1] [Cryptographic Integrity Protection]." When the improvement exploration module 22 determines in Step S202 that no security requirement that satisfies the target security level 24 can be extracted, the process returns to Step S201 because the security level is required to be reviewed and determined anew.

In Step S203, the improvement exploration module 22 maps the measure plan database 3 onto the security requirements extracted in Step S202 as security requirements that satisfy the target security level 24. The mapping in Step S203 uses the same method as the method of Step S101.

In Step S204, the improvement exploration module 22 determines whether a combination of constraint conditions indicated by the constraint condition information 40 of the subject Component C is selectable. The processing step of Step S204 is the same as the processing step of Step S102.

In Step S205, the improvement exploration module 22 determines whether any implementation mode out of implementation modes that are included in specific measures associated in the mapping of Step S203 satisfies the combination of constraint conditions selected in Step S204.

An example of combinations of constraint conditions of Component C is considered below. As in the first embodiment, constraint conditions of Component C can be combined in a plurality of ways. However, it is assumed in this example as well that a combination of Constraint Condition A (the type of the OS), Constraint Condition B (the type of the CPU), and Constraint Condition C (memory) is selected

A result of the mapping of Step S203 shows that a security measure "[Protocol] [ID: 1] [Use of the Strongest Encryption Option and Cipher Suite for TLS]" associated with "[System Integrity] [ID: 1] [Communication Integrity]" and with "[System Integrity] [ID: 1-1] [Cryptographic Integrity Protection]" has, as candidate implementation modes, a plurality of cipher suites including TLS_RSA_WITH_AES_128_CBC_SHA, TLS_RSA WITH AES 256_CBC_SHA256, TLS_RSA_WITH_AES_128_GCM_SHA256, and TLS_RSA_WITH_AES_128_GCM_SHA512.

As in the first embodiment, combinations of Constraint Condition A, Constraint Condition B, and Constraint Condition C are considered in order. It is found out as a result that two types of cipher suites are implementable, and that the implementable cipher suites are TLS_RSA_WITH_AES_256_CBC_SHA256 and TLS_RSA_WITH_AES_128_GCM_SHA256.

Accordingly, in Step S205, the improvement exploration module 22 determines that there are two types of implementation modes that satisfy the combination of constraint conditions (Constraint Condition A ∧ Constraint Condition B ∧ Constraint Condition C). When there is no combination of constraint conditions, that is, when the improvement exploration module 22 determines, in Step S204, that the combination of constraint conditions is unselectable, the output module 23 executes a processing step of Step S209. The processing step of Step S209 is the same as the processing step of Step S105.

In Step S206, the improvement exploration module 22 sorts out the two types of implementation modes described above. In this example, the target security level 24 is set as SL = 3, and alteration of information by terrorists and cyber crime groups are accordingly required to be assumed. A Cipher Block Chaining (CBC) mode of TLS is known to be susceptible to Lucky Thirteen Attack, which is a type of a padding oracle attack targeting a vulnerable part of a padding process.

Accordingly, in Step S206, the improvement exploration module 22 is required to select a more secure implementation mode out of TLS_RSA_WITH_AES_256_CBC_SHA256 and TLS_RSA_WITH_AES_128_GCM_SHA256.

In the second embodiment, security levels are written in the constraint condition field 65 which indicates constraint conditions required of implementation modes to satisfy in the measure plan database 3 shown in FIG. 12. According to the example of FIG. 12, whereas TLS_RSA_WITH_AES_256_CBC_SHA256 is executable in implementation at SL = 2, TLS_RSA_WITH_AES_128_GCM_SHA256 is executable in implementation at SL ≥ 3. The cipher suite TLS_RSA_WITH_AES_128_GCM_SHA256 having a Galois/Counter Mode (GCM) mode higher in security level of implementation is accordingly selected in Step S206.

In Step S206, the improvement exploration module 22 may sort out the implementation modes by displaying, on the display device 5, the respective implementation modes identified in Step S205 (the security levels of the implementation modes which are indicated in the constraint condition field 65 may be displayed additionally), and selecting in accordance with the user's input to the input device 4. In Step S206, the improvement exploration module 22 may also select, from the implementation modes identified in Step S205, implementation modes having high security levels of implementation based on a predetermined condition (for example, a predetermined number of implementation modes in descending order of security level, or implementation modes having security levels equal to or higher than a predetermined value), or may exclude implementation modes having low security levels of implementation based on a predetermined condition (for example, a predetermined number of implementation modes in ascending order of security level, or implementation modes having security levels equal to or lower than a predetermined value).

The processing step of Step S206 may be omitted. In other words, determination of Step S207 described below may be executed for every implementation mode identified in Step S205.

In Step S207, the improvement exploration module 22 re-examines whether the target security level 24 can be achieved by the implementation mode selected in Step S206. The improvement exploration module 22 examines suitableness of the security measure by comparing the security level in implementation and the target security level 24.

In this example, whereas the target security level 24 is set as SL = 3, the security level in implementation is SL ≥ 3 (that is, the security level in implementation is equal to or higher than the target security level 24), and the condition of Step S207 is accordingly satisfied. In a case in which the improvement exploration module 22 determines that the implementation mode selected in Step S206 cannot reach the target security level, processing of reviewing the security requirement at the target security level 24 begins again in Step S202. At that point, in a case in which a security requirement matching the target security level 24 cannot be extracted from the security regulation database 2 in Step S202, the target security level 24 is reviewed and determined anew in Step S201. As a result of reviewing, the target security level 24 may be decreased in some cases.

In Step S208, the output module 23 displays the security measure plan (TLS_RSA_WITH_AES_128_GCM_SHA256), a basis for selecting the security measure plan (because "Constraint Condition A ∧ Constraint Condition B ∧ Constraint Condition C" is satisfied), and the security level (SL = 3) on the display device 5. The processing is then ended.

As in the first embodiment, the improvement exploration module 22 may be designed so that, for example, a combination including all constraint conditions indicated by the constraint condition information 40 of a component selected in Step S200 is automatically selected in Step S204. The improvement exploration module 22 may also be designed so that the processing steps of from Step S205 to Step S207 are executed for every combination of constraint conditions.

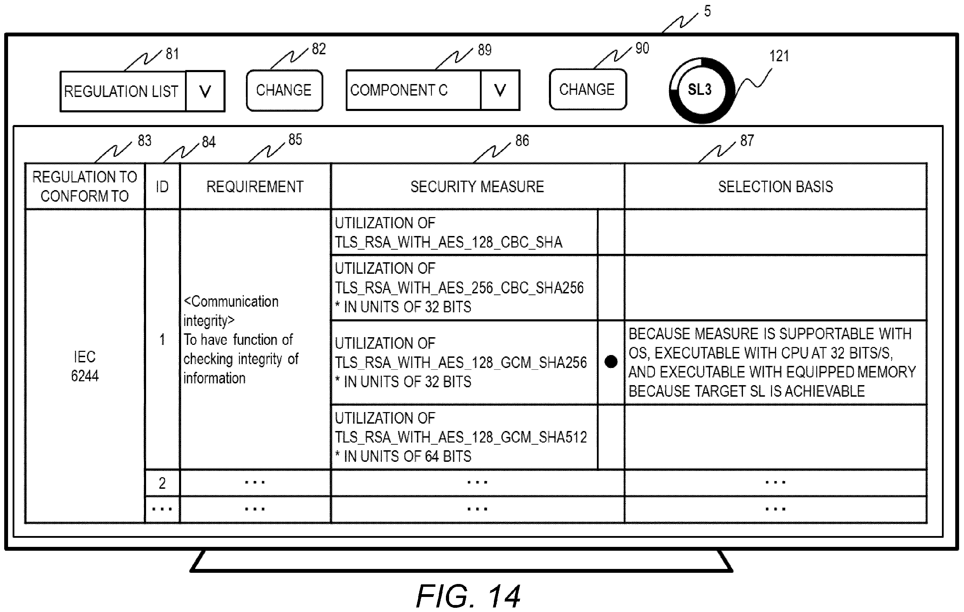

FIG. 14 is an explanatory diagram for illustrating a configuration example of a screen displayed on the display device 5 in Step S208. The display screen of the display device 5 differs from the display screen in the first embodiment in that a security level display area 121 is further provided. The security level display area 121 indicates the user's target security level 24, that is, a security level reachable when an appropriate security measure presented by the improvement exploration module 22 is implemented, as an example of the selection basis.

The selection basis field 87 in the OT product-geared security measure display area 88 in the second embodiment displays that a combination of constraint conditions is satisfied as a selection basis, as in the first embodiment, and further displays whether the user's target security level 24 is satisfied as another basis. Consequently, whereas two recommended security measures are presented in the first embodiment, recommended security measures in the second embodiment are narrowed down to one as a result of taking into consideration whether the security measures satisfy the user's target security level 24 (SL = 3).

According to the security measure determination device 1 for OT of the second embodiment, a regulation requirement matching the user's target security level 24 is extracted and, by analyzing a combination of constraint conditions with respect to a security measure that is associated with the requirement, an appropriate security measure suited to the security level intended by the user can be output with a basis for the appropriateness.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

## Claims

1. A security measure determination device, comprising:
a processor; and
a memory;
the memory being configured to hold:
rule information indicating a requirement that is required, in a rule concerning security, of a component included in a subject system;
constraint condition information indicating a plurality of constraint conditions about specifications of the component; and
measure plan information indicating measure plans that satisfy the requirement and constraint conditions required to be satisfied in order to implement the measure plans,
the processor being configured to:
associate the requirement indicated by the rule information with the measure plans indicated by the measure plan information as measure plans that satisfy the requirement;
select, based on the constraint conditions that are indicated by the measure plan information of the measure plans associated with the requirement, and the plurality of constraint conditions that are indicated by the constraint condition information, a measure plan from the measure plans associated with the requirement; and
generate data for displaying the selected measure plan.

2. The security measure determination device according to claim 1, wherein the processor is configured to generate data for displaying a selection basis indicating that the plurality of constraint conditions that are indicated by the constraint condition information satisfy constraint conditions that are associated with the selected measure plan in the measure plan information.

3. The security measure determination device according to claim 1,
wherein the component includes an OS, a CPU, and a memory, and
wherein the plurality of constraint conditions that are indicated by the constraint condition information and the constraint conditions that are indicated by the measure plan information each include at least one of a condition about an OS type of the component, a condition about CPU performance of the component, a condition about a memory capacity of the component, or a condition about an operational status of the component.

4. The security measure determination device according to claim 1,
wherein the rule information indicates a threat to the requirement,
wherein the measure plan information indicates an association between the threat and the measure plans, and
wherein the processor is configured to associate, based on the threat that is indicated by the rule information and the threat that is indicated by the measure plan information, the requirement indicated by the rule information with the measure plans indicated by the measure plan information as measure plans that satisfy the requirement.

5. The security measure determination device according to claim 1, wherein the processor is configured to select a measure plan for which a combination of at least one constraint condition out of the plurality of constraint conditions that are indicated by the constraint condition information satisfies the constraint conditions that are indicated by the measure plan information of the measure plans associated with the requirement, out of the measure plans associated with the requirement.

6. The security measure determination device according to claim 1,
wherein the memory is configured to hold information indicating a target security level,
wherein the rule information is configured to hold information indicating, for each security level, whether the requirement is to be satisfied at the each security level,
wherein the constraint conditions that are indicated by the measure plan information include first conditions required of the component to satisfy in order to implement the measure plans, and second conditions about security levels of the measure plans, and
wherein the processor is configured to:
identify, from the rule information, a requirement to be satisfied at the target security level;
associate the identified requirement with measure plans indicated by the measure plan information as measure plans that satisfy the identified requirement; and
select a measure plan out of the measure plans associated with the identified requirement, based on: the first conditions and the second conditions that are associated, in the measure plan information, with the measure plans associated with the identified requirement; the plurality of constraint conditions that are indicated by the constraint condition information; and the target security level.

7. The security measure determination device according to claim 6, wherein the processor is configured to generate data for displaying a selection basis indicating that the plurality of constraint conditions that are indicated by the constraint condition information satisfy one of the first conditions that is associated with the selected measure plan in the measure plan information, and that one of the second conditions that is associated with the selected measure plan in the measure plan information satisfies the target security level.

8. The security measure determination device according to claim 6, wherein the processor is configured to select a measure plan for which a combination of at least one constraint condition out of the plurality of constraint conditions that are indicated by the constraint condition information satisfies the first conditions that are indicated by the measure plan information of the measure plans associated with the identified requirement, out of the measure plans associated with the identified requirement.

9. A security measure determination method by a security measure determination device,
the security measure determination device having a processor and a memory;
the memory being configured to hold:
rule information indicating a requirement that is required, in a rule concerning security, of a component included in a subject system;
constraint condition information indicating a plurality of constraint conditions about specifications of the component; and
measure plan information indicating measure plans that satisfy the requirement and constraint conditions required to be satisfied in order to implement the measure plans,
the security measure determination method comprising:
associating, by the processor, the requirement indicated by the rule information with the measure plans indicated by the measure plan information as measure plans that satisfy the requirement;
selecting, by the processor, based on the constraint conditions that are indicated by the measure plan information of the measure plans associated with the requirement, and the plurality of constraint conditions that are indicated by the constraint condition information, a measure plan from the measure plans associated with the requirement; and
generating, by the processor, data for displaying the selected measure plan.
